# EUROPEAN PATENT SPECIFICATION

(11) **EP 2 355 246 B1**
(45) Date of publication and mention of the grant of the patent: **28.11.2018**
(21) Application number: 10290042.0
(22) Date of filing: 28.01.2010
(51) Int. Cl.: H01Q 13/20, H01Q 1/12, H02G 3/30

(54) **Radiating cable with mounting rail**
Abstrahlendes Kabel mit Montageschiene
Câble de radiation avec rail de montage

(43) Date of publication of application: 10.08.2011
(73) Proprietor: Alcatel Lucent, 91620 Nozay (FR)
(72) Inventor: Greiner, Martin, 30966 Hemmingen (DE); Mientkewitz, Olaf, 30952 Ronnenberg (DE); Mahlandt, Erhard, 30880 Laatzen (DE)
(74) Representative: Nokia EPO representatives

(56) References cited:
- EP-A2- 1 139 491
- DE-A1- 2 524 939
- DE-U- 1 788 553
- US-A- 4 625 187
- US-A1- 2001 015 282

## Description

### Field of the invention

The invention relates to radiating cables, more particularly to radiating cables with mounting rails.

### Background and related art

Radiating cables are used in indoor telecommunication systems to provide radio frequency coverage in confined areas. Besides in buildings they are used in train, road and metro tunnels acting as long antennas to provide bi-directional radio frequency services.

DE 1788553 U discloses a coaxial cable with a mounting structure. EP1139491A2 discloses a radiating coaxial cable comprising an inner conductor, a dielectric, an outer conductor. The outer conductor comprises apertures, which are separated from each other. US2001/0015282A1 discloses a cable comprising at least one conductor and an outer sheath surrounding the conductor(s). US4625187 discloses a radiating coaxial electric cable comprising a conductor core, a cellular dielectric, an outer conductor having apertures for the passage of electromagnetic radiation, and an outer insulating sheath. DE2524939A1 discloses a mounting rail for cables, tubes and other filamentary goods.

### Summary of the invention

It is an object of the present invention to provide an improved radiating cable, and an improved system of a radiating cable and a tunnel. These objects are solved by the features of the independent claim. Preferred embodiments of the invention are described in the dependent claims.

The invention provides a radiating cable with at least one aperture for radio frequency signals, wherein said radiating cable comprises at least one mounting rail at an outer jacket of said radiating cable. The mountina rail has a predefined position relative to said at least one aperture. The mounting rail is adapted to be fixed directly to a wall and/or ceiling.

Therefore, the mounting rail is connected to the outer jacket of the radiating cable such that it supports the radiating cable when the mounting rail is fixed to a wall and/or ceiling. The mounting rail is fixed to the wall directly without any additional mounting structures. The fixation may be performed by fixation means such as bolts, screws, dowels, anchors and/or gudgeons.

Because the mounting rail has a predefined position relative to said at least one aperture the direction of radiation is predefined when the radiating cable is fixed to a wall and/or ceiling. Thus, no additional configuration or adjustment of the radiating cable is needed. This reduces installation time and costs.

According to embodiments of the invention the radiating cable further comprises an inner and an outer conductor. In this case the radiating cable is a coaxial cable with apertures.

According to embodiments of the invention the predefined position of the mounting rail depends on a linear alignment of the at least one aperture and at least one further linear alignment of at least one further aperture. This means, that the predefined position is determined by the linear alignment of the at least one and the at least one further aperture. Thereby it is predefined where the aperture is located when the cable is mounted to a tunnel wall and/or ceiling. Thus, there is no need for configuring the radiating cable when fixing it to the wall and/or ceiling. This is advantageous because the installation process is simplified. The apertures are automatically aligned correctly when the radiating cable is fixed to the wall and/or ceiling.

According to embodiments of the invention the mounting rail comprises at least one hole. The mounting rail can for example be fixed to the wall and/or ceiling by fixation means reaching through the hole. This is advantageous because the mounting rail can be easily fixed to the wall and/or ceiling. This reduces installation time and costs.

According to embodiments of the invention the hole comprises a hollow rivet. The hollow rivet reinforces the hole and prevents the hole from frazzling.

According to embodiments of the invention the radiating cable further comprises a support element. The support element increases the stiffness of the radiating cable. Thus, the support element helps the mounting rail to support the radiating cable. Preferably, the support element is integrated into the mounting rail. Additionally, the support element may enclose at least partly the inner and the outer conductor of the radiating cable.

According to embodiments of the invention the mounting rail is located radial or tangentially with respect to the perimeter of the outer jacket. By arranging the mounting rail tangentially with respect to the perimeter of the outer jacket the radiating cable can easily be installed directly to a wall and/or ceiling. When the mounting rail is arranged radial with respect to the perimeter of the outer jacket the mounting rail may also be directly fixed to the wall and/or ceiling. It is to be noted that a defined distance between the wall and the radiating cable must be ensured in order to preserve sufficient radiation.

According to embodiments of the invention the at least one aperture is a longitudinal aperture. The longitudinal aperture ranges from a first end-region of the radiating cable to a second end-region of the radiating cable. In other words, the radiating cable has one long aperture for emitting radiation. The one aperture reaches from one end of the cable to the other end of the cable. This ensures a homogeneous radiation along the radiating cable.

According to embodiments of the invention the at least one aperture is a plurality of apertures. The apertures of the plurality of apertures are located in periodical distances. By arranging the apertures periodically the radiation emitted by the radiating cable is kept almost homogeneous along the length of the cable.

According to embodiments of the invention the at least one aperture is a plurality of apertures, the apertures of the plurality of apertures comprising several groups of apertures. The groups of apertures are located in periodic distances. In other words the plurality of apertures is divided into a plurality of groups of apertures, each group comprising several apertures. By arranging the groups of apertures in periodical distances the radiation is emitted homogeneously by the radiating cable.

According to embodiments of the invention the outer jacket is made from a synthetic material. The synthetic material is isolating and directly connected to the mounting rail.

In another aspect the invention relates to a system of a radiating cable, a tunnel with a tunnel ceiling and two tunnel walls, a wireless communication network. The wireless telecommunication network comprises a plurality of mobile devices. The radiating cable is connected to the wireless telecommunication network and the radiating cable is fixed to the tunnel ceiling and/or at least one of the two tunnel walls. Further, the radiating cable is adapted to transmit signals from the wireless telecommunication network and the radiating cable is adapted to receive signals from the plurality of mobile devices.

In one example a method of installing a radiating cable on a wall and/or a ceiling with fixing means is provided. The radiating cable is attached to the wall and/or the ceiling with fixing means. The fixing means reach through the at least one hole of the mounting rail of the radiating cable and are fixed to the wall and/or the ceiling. The mounting rail supports the radiating cable.

For example, the fixing means are bolts, screws, dowels, anchors and/or gudgeons.

According to embodiments of the invention the radiating cable is additionally supported by a support element, the support element being located in the mounting rail. Preferably the support element encloses the inner and the outer conductor of the radiating cable at least partly.

### Brief description of the drawings

In the following preferred embodiments of the invention will be described, by way of example only, and with reference to the drawings in which:
- Fig. 1: is a schematic view of a radiating cable;
- Fig. 2: is a schematic view of a radiating cable with a tangentially arranged mounting rail;
- Fig. 3: is a radiating cable with a support element;
- Fig. 4: is a schematic view of a radiating cable with a tangentially arranged mounting rail with a support element;
- Fig. 5: is a schematic view of a radiating cable with a support element;
- Fig. 6: is a schematic view of a radiating cable fixed to a tunnel wall with a bolt;
- Fig. 7: is a schematic view of a radiating cable fixed to a tunnel wall with a hook;
- Fig. 8: is a schematic view of a radiating cable with a tangentially arranged mounting rail attached directly to a wall;
- Fig. 9: is a schematic view of a radiating cable with a plurality of apertures in periodic distances; and
- Fig. 10: is a schematic view of a radiating cable with a plurality of apertures.

### Detailed description

Like numbered elements in these Figs. are either identical elements or perform the same function. Elements which have been discussed previously will not necessarily be discussed in later Figs. if the function is identical.

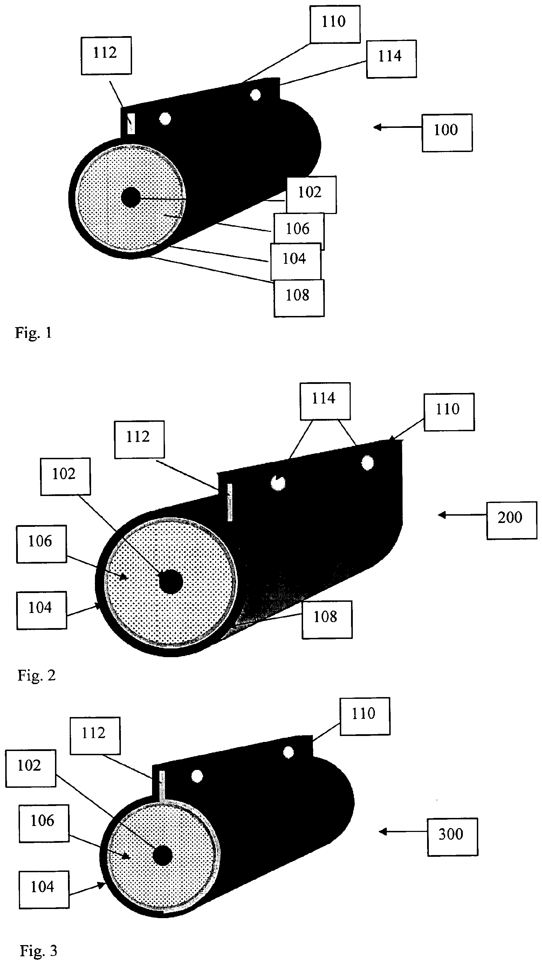

Fig. 1 is a schematic view of a radiating cable 100 with an inner conductor 102, a slotted outer conductor 104, a dielectric 106 in between the inner conductor 102 and the slotted outer conductor 104, a cable jacket 108, a mounting rail 110 with a support element 112 and two holes 114. It is to be noted that the hole may also comprise a hollow rivet. It may also be referred to the slots of the outer conductor 104 as apertures.

In the center of the radiating cable 100 the inner conductor 102 is located. Via the inner conductor 102 signals can be transmitted through the radiating cable. Because the outer conductor 104 is slotted, radiation emitted by the inner conductor 102 is transmitted to the environment through the slots of outer conductor 104.

The cable jacket 108 consists preferably of a synthetic material. The cable jacket 108 avoids oxidizing of the two conductors 102 and 104 and protects the radiating cable from environmental impacts. The cable jacket 108 is connected to the mounting rail 110. The mounting rail 110 is adapted to be fixed to a wall and/or ceiling by fixing means (not depicted) which reach through hole 114. For improving the support of the radiating cable 100 a support element 112 is located inside mounting rail 110. Support element 112 increases the stiffness of mounting rail 110. Thus, radiating cable 100 can easily be fixed to a wall and/or ceiling of for example a tunnel with fixing means put through holes 114. This is achieved by mounting rail 110, which is strong enough to support the radiating cable 100.

Mounting rail 110 is located radial with respect to the perimeter of the outer conductor 104.

Mounting rail 110 has to be strong and stiff enough to support radiating cable 100. It is to be noted that the cross section of the radiating cable is preferably 10-100 mm.

Mounting rail 110 is attached directly to a tunnel wall and/or ceiling without any additional rail. Only fixing elements like bolts, screws, dowels, anchors and/or gudgeons are used to fix radiating cable 100 via mounting rail 110 to a tunnel wall and/or ceiling.

The slots of outer conductor 104 are in a predefined position relative to mounting rail 110. Thereby the direction of radiation is predefined and no additional adjustment or configuration is necessary during the installation process. The slots are located such that after installation of the radiating cable 100 to a wall and/or ceiling the radiation is directed away from the wall and/or the ceiling. This guarantees an optimal radiation.

Fig. 2 is a schematic view of a radiating cable 200. Radiating cable 200 is similar to radiating cable 100 of Fig. 1. It also comprises an inner conductor 102, a slotted outer conductor 104, a dielectric 106 in between the two conductors 102 and 104, a cable jacket 108, a mounting rail 110, a support element 112 and two holes 114. Radiating cable 200 has the same functions as radiating cable 100. The difference to radiating cable 100 of Fig. 1 is that the mounting rail 110 is located tangentially with respect to the perimeter of the outer jacket. Radiating cable 100 in Fig. 1 has a mounting rail 110, which is located radial with respect to the perimeter of the outer jacket.

Because the slots of the slotted outer conductor 104 are located at the opposite side of radiating cable 200 with respect to mounting rail 110, the radiation emitted by inner conductor 102 is emitted away from mounting rail 110, which means that the radiation is also transmitted away from the wall and/or ceiling to which the radiating cable 200 is attached. By defining the angle between the mounting rail 110 and the slots of outer conductor 104 the transmission direction of the radiation transmitted from inner conductor 102 to the environment is determined. There is no need for a configuration or an adjustment of radiating cables 100 or 200 when installing them to a tunnel wall and/or ceiling. Cables 100 and 200 are fixed to the tunnel wall and/or ceiling and because the radiation direction is predetermined no configuration or adjustment is necessary for optimizing the radiation direction. This reduces installation costs and makes the installation of cables 100 and 200 more simple.

Fig. 3 is a schematic view of a radiating cable 300. Radiating cable 300 comprises, as radiating cable 100 in Fig. 1, an inner conductor 102, an outer conductor 104 and a dielectric 106. A mounting rail 110 of radiating cable 300 comprises a support element 112. It is to be noted that support element 112 encloses partly outer conductor 104 and inner conductor 102. This increases the stability of radiating cable 300. The support element 112 may be made of a metallic material or a non-metallic material. In case of a non-metallic material care must be taken that the slots of the outer conductor 104 must be directed away from support element 112. Radiation can only be emitted from inner conductor 102 to the environment past and not through support element 112, if support element 112 is made of a metallic material. Because support element 112 encloses partly outer conductor 104 the stiffness and support of radiating cable 300 is increased.

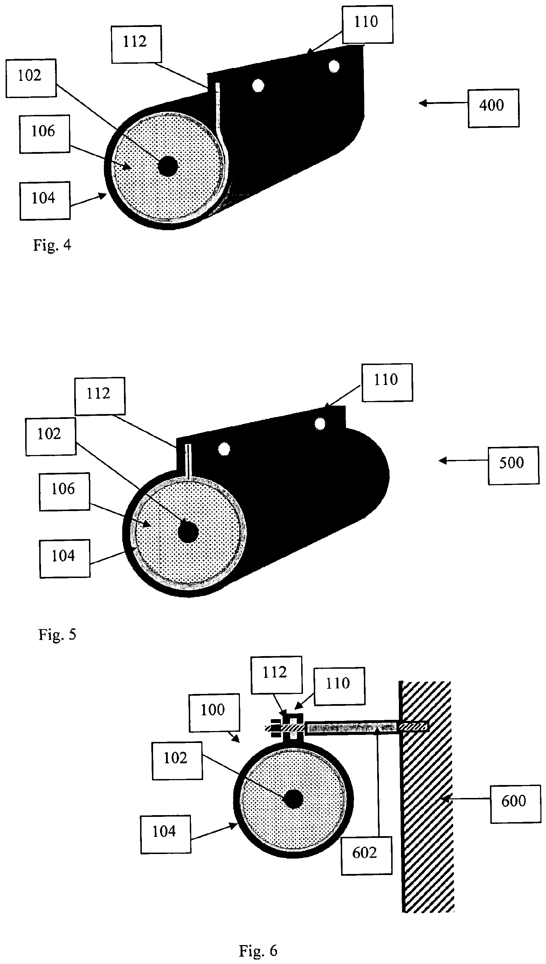

Fig. 4 is a schematic view of a radiating cable 400 with an inner conductor 102, an outer conductor 104 with slots (not depicted) and a dielectric in between the two conductors. Radiating cable 400 is adapted to be attached to a tunnel wall and/or ceiling with mounting rail 110. Mounting rail 110 is located tangentially with respect to the perimeter of the radiating cable 400 comparable to radiating cable 200 of Fig. 2.

Radiating cable 400 comprises a support element 112 which is partly located in mounting rail 110 and encloses partly the inner conductor 102 and outer conductor 104. It is to be noted that the slots for emitting radiation of outer conductor 104 have to be directed away from support element 112 if support element 112 is made of a metallic material. In case support element 112 is not made of a metallic material the slots in outer conductor 104 for emitting radiation may also be directed towards support element 112.

Because mounting rail 110 is tangentially located with respect to the perimeter of cable 400 the apertures for emitting radiation have to be directed away from support element 112. The apertures for emitting radiation are herein also referred to as slots of the outer conductor. The apertures have to be directed away from the wall and/or ceiling to which radiating cable 400 is mounted. This is why the apertures must also be directed away from support element 112 because support element 112 is located at the side of radiating cable 400 which is adapted to be attached to the tunnel wall and/or ceiling.

Fig. 5 is a schematic view of a radiating cable 500 with an inner conductor 102, a slotted outer conductor 104 and a dielectric 106 located in between the two conductors 102 and 104. Radiating cable 500 comprises further a mounting rail 110, which is adapted to be fixed directly to a tunnel wall and/or ceiling. Radiating cable 500 further comprises a support element 112, which is located inside mounting rail 110 and encloses completely outer conductor 104 and inner conductor 102. It is to be noted that support element 112 may be made in this case only from non-metallic materials. A metallic support element 112 would prevent the radiation being transmitted from inner conductor 102 to the environment. A support element 112, which completely encloses outer conductor 104 and inner conductor 102 is advantageous because the stiffness and the support for radiating cable 500 is increased.

Fig. 6 is a schematic view of a radiating cable 100 being fixed to a wall and/or ceiling 600. Radiating cable 100 is fixed to wall/ceiling 600 with a bolt 602.

Bolt 602 is fixed to wall 600 and reaches through mounting rail 110 and support element 112, wherein support element 112 is located within mounting rail 110. Radiating cable 100 must be located at a certain distance with respect to wall/ceiling 600 for optimal radiation. This is achieved by the length of bolt 602. The apertures of outer conductor 104 for transmitting radiation from inner conductor 102 to the environment are directed away from wall/ceiling 600. Thus, an optimal radiation is achieved by simply fixing radiating cable 100 with bolt 602 and mounting rail 110 to wall/ceiling 600. There is no need for an additional adjustment or configuration when installing cable 100. The apertures for emitting radiation are automatically adjusted by fixing mounting rail 110 to wall/ceiling 600.

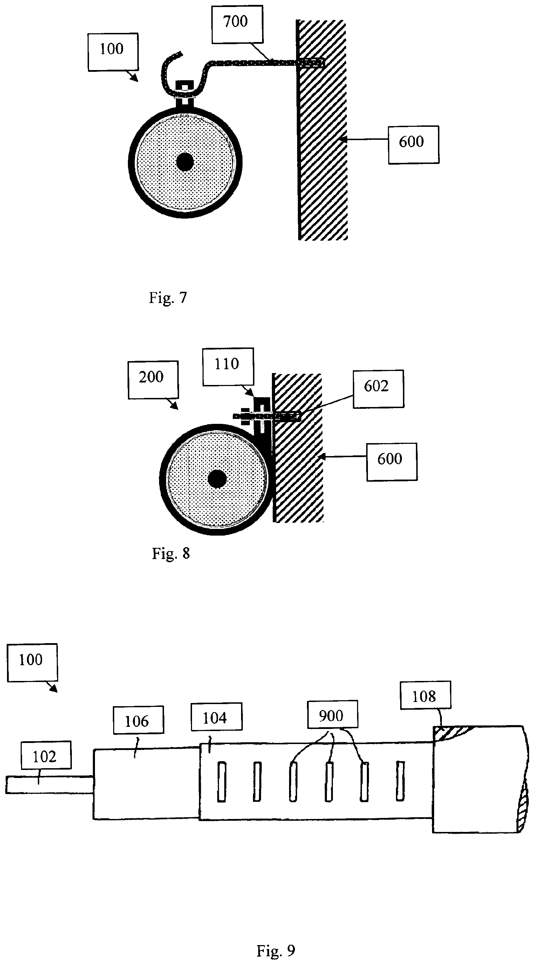

Fig. 7 is a schematic view of a radiating cable 100 fixed to a wall/ceiling 600 with a hook 700. Mounting rail 110 of radiating cable 100 is located radial with respect to the perimeter of radiating cable 100. By using a hook 700 for fixing cable 100 to wall/ceiling 600 the distance between radiating cable 100 and wall/ceiling 600 is predetermined. This is advantageous for emitting radiation.

Fig. 8 is a schematic view of a radiating cable 200 with a tangentially located mounting rail 110 with respect to the perimeter of radiating cable 200 fixed to a wall/ceiling 600. Because mounting rail 110 is located tangentially with respect to the perimeter of radiating cable 200 there is no need for a distance between radiating cable 200 and wall/ceiling 600. Radiating cable 200 may be fixed directly to wall/ceiling 600 without any space in between radiating cable 200 and wall/ceiling 600.

Therefore a bolt 602 fixes mounting rail 110 to wall/ceiling 600. The apertures for emitting radiation from cable 200 to the environment directed away from wall/ceiling 600 in order to guarantee an optimal radiation.

Fig. 9 is a schematic view of a radiating cable 100 with an inner conductor 102, an outer conductor 104 with slots or apertures 900, a cable jacket 108 and a dielectric 106 being located in between inner conductor 102 and outer conductor 104. Slots 900 are located in periodical distances in outer conductor 104. Through every slot 900 radiation of inner conductor 102 is emitted to the environment. This is why slots 900 may also be referred to as apertures. By arranging slots 900 in periodical distances a homogeneous radiation of cable 100 is achieved.

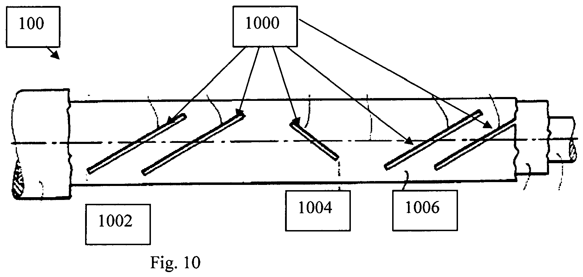

Fig. 10 is a schematic view of a radiating cable 100 with a plurality of apertures 1000. Apertures 1000 are divided into sub-groups 1002, 1004 and 1006. Groups 1002, 1004 and 1006 are located in periodical distances. Groups 1004 and 1006 comprise two apertures. Group 1004 comprises one aperture. The aperture of group 1004 is sloped contrary to apertures of groups 1002 and 1006. Because groups 1002, 1004 and 1006 are located in periodical distances a homogeneous radiation is achieved.

**List of reference numerals**

| | |
|---|---|
| 100 | Radiating cable |
| 102 | Inner conductor |
| 104 | Slotted outer conductor |
| 106 | Dielectric |
| 108 | Cable jacket |
| 110 | Mounting rail |
| 112 | Support element |
| 114 | Hole |
| 200 | Radiating cable |
| 300 | Radiating cable |
| 400 | Radiating cable |
| 500 | Radiating cable |
| 600 | Wall/ceiling |
| 602 | Bolt |
| 700 | Hook |
| 900 | Aperture |
| 1000 | Aperture |
| 1002 | Group of apertures |
| 1004 | Group of apertures |
| 1006 | Group of apertures |

## Claims

1. A radiating cable (100; 200; 300; 400; 500) with at least one aperture (900; 1000) for radio frequency signals, wherein said radiating cable (100; 200; 300; 400; 500) comprises at least one mounting rail (110) at an outer jacket (108) of said radiating cable with a predefined position relative to said at least one aperture (900; 1000), wherein the mounting rail (110) is configured to be fixed directly to a wall and/or ceiling (600), such that after fixation of the mounting rail (110) to the wall and/or ceiling (600) the at least one aperture (900; 1000) is automatically located such that the direction of radiation is predefined and the radiation is directed away from the wall and/or ceiling (600),
the radiating cable (100; 200; 300; 400; 500) further comprising an inner (102) and an outer conductor (104),
the radiating cable (100; 200; 300; 400; 500) further comprising a support element (112), the support element (112) increasing the stiffness of the radiating cable (100; 200; 300; 400; 500),
wherein the support element (112) encloses at least partly the inner (102) and the outer conductor (104),
the support element (112) being made of metallic material.

2. Radiating cable (100; 200; 300; 400; 500) according to claim 1, wherein the predefined position is located right-angled or in an angle of 180° to the at least one aperture (900; 100).

3. Radiating cable (100; 200; 300; 400; 500) according to any one of the preceding claims, wherein the mounting rail (110) comprises at least one hole (114).

4. Radiating cable (100; 200; 300; 400; 500) according to claim 3, wherein the hole (114) comprises a hollow rivet.

5. Radiating cable according (100; 200; 300; 400; 500) to any one of the preceding claims, wherein the mounting rail (110) is located radial or tangentially with respect to the perimeter of the outer jacket (108).

6. Radiating cable (100; 200; 300; 400; 500) according to any one of the preceding claims, wherein the at least one aperture (900; 1000) is a longitudinal aperture, the longitudinal aperture ranging from a first end region of the radiating cable to a second end region of the radiating cable.

7. Radiating cable (100; 200; 300; 400; 500) according to any one of the preceding claims, wherein the at least one aperture (900; 1000) is a plurality of apertures, the apertures of the plurality of apertures being located in periodic distances.

8. Radiating cable (100; 200; 300; 400; 500) according to any one of the preceding claims, wherein the at least one aperture (900; 1000) is a plurality of apertures, the apertures of the plurality of apertures comprising several groups (1004; 1006) of apertures, the groups of apertures (1004; 1006) being located in periodic distances.

9. Radiating cable (100; 200; 300; 400; 500) according to any one of the preceding claims, wherein the outer jacket is (108) made from a synthetic material.

10. System of a radiating cable (100; 200; 300; 400; 500) according to any one of the preceding claims, a tunnel with a tunnel ceiling and two tunnel walls, a wireless telecommunication network, the wireless telecommunication network comprising a plurality of mobile devices, the radiating cable (100; 200; 300; 400; 500) being connected to the wireless telecommunication network and the radiating cable being fixed to the tunnel ceiling and/or at least one of the two tunnel walls, wherein the radiating cable (100; 200; 300; 400; 500) is adapted to transmit signals from the wireless telecommunication network, and wherein the radiating cable (100; 200; 300; 400; 500) is adapted to receive signals from the plurality of mobile devices.

## Patentansprüche

1. Strahlerkabel (100; 200; 300; 400; 500) mit wenigstens einer Öffnung (900; 1000) für Hochfrequenzsignale, wobei das Strahlerkabel (100; 200; 300; 400; 500) wenigstens eine Montageschiene (110) an einer äußeren Ummantelung (108) des Strahlerkabels mit einer vordefinierten Position relativ zu der wenigstens einen Öffnung (900; 1000) aufweist, wobei die Montageschiene (110) dazu konfiguriert ist, direkt an eine Wand und/oder eine Decke (600) montiert zu werden, so dass die wenigstens eine Öffnung (900; 1000) nach der Befestigung der Montageschiene (110) an die Wand und/oder die Decke (600) automatisch derart lokalisiert ist, dass die Strahlungsrichtung vordefiniert ist und die Strahlung von der Wand und/oder der Decke (600) weg gelenkt wird,
wobei das Strahlerkabel (100; 200; 300; 400; 500) ferner einen inneren (102) und einen äußeren Leiter (104) umfasst,
wobei das Strahlerkabel (100; 200; 300; 400; 500) ferner ein Stützelement (112) umfasst, wobei das Stützelement (112) die Steifigkeit des Strahlerkabels (100; 200; 300; 400; 500) erhöht,
wobei das Stützelement (112) den inneren (102) und äußeren Leiter (104) wenigstens teilweise umschließt, wobei das Stützelement (112) aus einem metallischen Material gefertigt ist.

2. Strahlerkabel (100; 200; 300; 400; 500) nach Anspruch 1, wobei sich die vordefinierte Position rechtwinklig oder in einem Winkel von 180° zu der wenigstens einen Öffnung (900; 1000) befindet.

3. Strahlerkabel (100; 200; 300; 400; 500) nach einem der vorhergehenden Ansprüche, wobei die Montageschiene (110) wenigstens ein Loch (114) umfasst.

4. Strahlerkabel (100; 200; 300; 400; 500) nach Anspruch 3, wobei das Loch (114) eine Hohlniete umfasst.

5. Strahlerkabel (100; 200; 300; 400; 500) nach einem der vorhergehenden Ansprüche, wobei die Montageschiene (110) mit Bezug auf den Perimeter der äußeren Umhüllung (108) radial oder tangential lokalisiert ist.

6. Strahlerkabel (100; 200; 300; 400; 500) nach einem der vorhergehenden Ansprüche, wobei die wenigstens eine Öffnung (900; 1000) eine longitudinale Öffnung ist, wobei die longitudinale Öffnung von einem ersten Endgebiet des Strahlerkabels zu einem zweiten Endgebiet des Strahlerkabels reicht.

7. Strahlerkabel (100; 200; 300; 400; 500) nach einem der vorhergehenden Ansprüche, wobei die wenigstens eine Öffnung (900; 1000) mehrere Öffnungen ist, wobei die Öffnungen der mehreren Öffnungen in periodischen Abständen lokalisiert sind.

8. Strahlerkabel (100; 200; 300; 400; 500) nach einem der vorhergehenden Ansprüche, wobei die wenigstens eine Öffnung (900; 1000) mehrere Öffnungen ist, wobei die Öffnungen der mehreren Öffnungen einige Gruppen (1004; 1006) von Öffnungen umfassen, wobei die Gruppen von Öffnungen (1004; 1006) in periodischen Abständen lokalisiert sind.

9. Strahlerkabel (100; 200; 300; 400; 500) nach einem der vorhergehenden Ansprüche, wobei die äußere Umhüllung (108) aus einem synthetischen Material gefertigt ist.

10. System aus einem Strahlerkabel (100; 200; 300; 400; 500) nach einem der vorhergehenden Ansprüche, einem Tunnel mit einer Tunneldecke und zwei Tunnelwänden, einem Drahtloskommunikationsnetz, wobei das Drahtloskommunikationsnetz mehrere Mobilvorrichtungen umfasst, wobei das Strahlerkabel (100; 200; 300; 400; 500) mit dem Drahtloskommunikationsnetz verbunden ist und das Strahlerkabel an der Tunneldecke und/oder wenigstens einer der zwei Tunnelwände befestigt ist, wobei das Strahlerkabel (100; 200; 300; 400; 500) dazu eingerichtet ist, Signale von dem Drahtloskommunikationsnetz zu übertragen, und wobei das Strahlerkabel (100; 200; 300; 400; 500) dazu eingerichtet ist, Signale von den mehreren Mobilvorrichtungen zu empfangen.

## Revendications

1. Câble de rayonnement (100; 200; 300; 400; 500) comportant au moins une ouverture (900; 1000) pour des signaux de radiofréquence, dans lequel ledit câble de rayonnement (100; 200; 300; 400; 500) comprend au moins un rail de montage (110) au niveau d'une enveloppe extérieure (108) dudit câble de rayonnement avec une position prédéfinie par rapport à ladite au moins une ouverture (900; 1000), dans lequel le rail de montage (110) est configuré de manière à être fixé directement à une paroi et/ou un plafond (600), de telle sorte que, après la fixation du rail de montage (110) à la paroi et/ou au plafond (600), ladite au moins une ouverture (900; 1000) soit automatiquement située de telle sorte que la direction de rayonnement soit prédéfinie et que le rayonnement soit dirigé à l'écart de la paroi et/ou du plafond (600),
le câble de rayonnement (100; 200; 300; 400; 500) comprenant en outre un conducteur intérieur (102) et un conducteur extérieur (104),
le câble de rayonnement (100; 200; 300; 400; 500) comprenant en outre un élément de support (112), l'élément de support (112) augmentant la rigidité du câble de rayonnement (100; 200; 300; 400; 500),
dans lequel l'élément de support (112) enveloppe au moins partiellement le conducteur intérieur (102) et le conducteur extérieur (104), et
l'élément de support (112) est constitué d'un matériau métallique.

2. Câble de rayonnement (100; 200; 300; 400; 500) selon la revendication 1, dans lequel la position prédéfinie est située à angle droit ou selon un angle de 180° par rapport à ladite au moins une ouverture (900; 100).

3. Câble de rayonnement (100; 200; 300; 400; 500) selon l'une quelconque des revendications précédentes, dans lequel le rail de montage (110) comprend au moins un trou (114).

4. Câble de rayonnement (100; 200; 300; 400; 500) selon la revendication 3, dans lequel le trou (114) comprend un rivet creux.

5. Câble de rayonnement (100; 200; 300; 400; 500) selon l'une quelconque des revendications précédentes, dans lequel le rail de montage (110) est situé radialement ou tangentiellement par rapport au périmètre de l'enveloppe extérieure (108).

6. Câble de rayonnement (100; 200; 300; 400; 500) selon l'une quelconque des revendications précédentes, dans lequel ladite au moins une ouverture (900; 1000) est une ouverture longitudinale, l'ouverture longitudinale s'étendant à partir d'une première région d'extrémité du câble de rayonnement jusqu'à une seconde région d'extrémité du câble de rayonnement.

7. Câble de rayonnement (100; 200; 300; 400; 500) selon l'une quelconque des revendications précédentes, dans lequel ladite au moins une ouverture (900; 1000) est une pluralité d'ouvertures, les ouvertures de la pluralité d'ouvertures étant situées à des distances périodiques.

8. Câble de rayonnement (100; 200; 300; 400; 500) selon l'une quelconque des revendications précédentes, dans lequel ladite au moins une ouverture (900; 1000) est une pluralité de ouvertures, les ouvertures de la pluralité d'ouvertures comprenant plusieurs groupes (1004; 1006) d'ouvertures, les groupes d'ouvertures (1004; 1006) étant situés à des distances périodiques.

9. Câble de rayonnement (100; 200; 300; 400; 500) selon l'une quelconque des revendications précédentes, dans lequel l'enveloppe extérieure (108) est constituée d'un matériau synthétique.

10. Système de câble de rayonnement (100; 200; 300; 400; 500) selon l'une quelconque des revendications précédentes, comprenant un tunnel présentant un plafond de tunnel et deux parois de tunnel, un réseau de télécommunication sans fil, le réseau de télécommunication sans fil comprenant une pluralité de dispositifs mobiles, le câble de rayonnement (100; 200; 300; 400; 500) étant connecté au réseau de télécommunication sans fil et le câble de rayonnement étant fixé au plafond de tunnel et/ou à au moins une des deux parois de tunnel, dans lequel le câble de rayonnement (100; 200; 300; 400; 500) est adapté pour transmettre des signaux à partir du réseau de télécommunication sans fil, et dans lequel le câble de rayonnement (100; 200; 300; 400; 500) est adapté pour recevoir des signaux en provenance de la pluralité de dispositifs mobiles.
